# EUROPÄISCHE PATENTSCHRIFT

(11) **EP 4 386 222 B1**
(45) Veröffentlichungstag und Bekanntmachung des Hinweises auf die Patenterteilung: **27.08.2025**
(21) Anmeldenummer: 23215554.9
(22) Anmeldetag: 11.12.2023
(51) Int. Cl.: F16C 1/10, F16C 1/14, F16C 1/22, F16C 1/26

(54) **BOWDENZUGKUPPLUNG ZUM LÖSBAREN VERKUPPELN EINES ERSTEN BOWDENZUGS MIT EINEM ZWEITEN BOWDENZUG**
BOWDEN CABLE COUPLING FOR RELEASABLY COUPLING A FIRST BOWDEN CABLE TO A SECOND BOWDEN CABLE
ACCOUPLEMENT DE CÂBLE BOWDEN POUR COUPLER DE MANIÈRE AMOVIBLE UN PREMIER CÂBLE BOWDEN À UN SECOND CÂBLE BOWDEN

(30) Priorität: 14.12.2022 DE 102022133228
(43) Veröffentlichungstag der Anmeldung: 19.06.2024
(73) Patentinhaber: GKF Invest GmbH, 56235 Ransbach-Baumbach (DE)
(72) Erfinder: Horacek, Gregor, 56235 Ransbach-Baumbach (DE)
(74) Vertreter: Franke, Markus

(56) Entgegenhaltungen:
- EP-A2- 2 495 460
- DE-C- 722 661
- JP-U- S60 178 617

## Beschreibung

Die Erfindung betrifft eine Bowdenzugkupplung zum lösbaren Verkuppeln eines ersten Bowdenzugs mit einem zweiten Bowdenzug.

Bowdenzüge werden verwendet mechanische Kräfte von einem Betätigungselement auf ein Funktionselement zu übertragen. Bowdenzüge umfassen einen meist litzenartigen Drahtzug, auch Seele genannt, wobei die Seele in einer Bowdenzughülle in axialer Richtung der Seele verschiebbar geführt ist. In der Regel steht der Seele an beiden Enden des Bowdenzugs vor und hat dort Anschlussstücke, beispielsweise in Form von Haltenippeln, mit denen das eine Ende der Seele an einem Betätigungselement und das andere Ende an einem zu betätigenden Funktionselement befestigt werden können. Es kann aber auch sein, dass nur an einem Ende ein Haltenippel vorgesehen ist und das andere Ende durch eine Klemmschraube mit dem Funktionselement bzw. dem Betätigungselement verbunden ist.

Bekannt sind Bowdenzüge unter anderem von Fahrrädern insbesondere in der Form von Schaltzügen oder Bremszügen. Bowdenzüge finden zum Beispiel auch Anwendung bei Kinderwägen, Rollstühlen und Therapiestühlen, insbesondere zum Übertragen der mechanischen Kräfte eines Bremshebels auf eine Radbremse. Bei über einen Bowdenzug miteinander verbundenen Elementen besteht die Problematik, dass ein Lösen der Verbindung zweitaufwändig ist und in der Regel auch nicht werkzeuglos erfolgen kann. Dieser Umstand ist insbesondere dann problematisch, wenn ein Trennen von Komponenten erfolgen soll und die eine Komponenten das Betätigungselement trägt und die andere Komponente das Funktionselement trägt. Beispielsweise kann es notwendig sein oder vorgesehen sein, einen Lenker mit einem Bremshebel von einem Fahrradrahmen abzutrennen, um ein separates Verstauen zu ermöglichen oder ein Packmaß zu verringern. Auch kann durchaus vorgesehen sein, dass ein Fahrradrahmen als solcher trennbar oder zusammenklappbar ist. Selbst wenn der Bowdenzug von einem der Elemente gelöst werden kann, besteht häufig die Problematik, dass dies nicht werkzeuglos erfolgen kann. Auch hat das endseitige Lösen des Bowdenzugs von einem der Elemente, beispielsweise dem mit dem Griff verbundenen Element, mit dem Nachteil, dass der Bowdenzug dann über eine große Länge frei ist, so dass dieser freie Teil herabhängt und hin und her schwingen kann. Zudem besteht bei einem solchen Lösen die Problematik, dass bei einem erneuten Verbinden nicht sichergestellt werden kann, dass eine wirksame Länge des Bowdenzugs nach dem Verbinden identisch ist mit einer wirksamen Länge vor dem Verbinden, was zu einer unerwünschten Veränderung des Betätigungswegs des Betätigungselements führen kann bzw. eine Korrektur der wirksamen Länge notwendig macht. In Hinblick auf das Lösen von Komponenten voneinander, an denen Elemente angebracht sind, die über einen Bowdenzug miteinander verbunden sind, ist es daher vorteilhaft, wenn der Bowdenzug als solcher in einem Bereich zwischen den beiden Elementen trennbar ist, insofern der Bowdenzug als solcher lösbar miteinander verkuppelte Bowdenzüge bzw. Bowdenzugabschnitte aufweist.

Aus dem Stand der Technik sind grundsätzlich Bowdenzugkupplungen zum lösbaren Verkuppeln zweier Bowdenzüge bzw. Bowdenzugabschnitte bekannt. Beispielsweise wird in der EP 2 495 460 A2 eine solche Bowdenzugkupplung beschrieben. Allerdings ist deren Handhabung zwecks Lösens und Verbindens aufwendig. Zudem ist die dort beschriebene Bowdenzugkupplung nicht dazu geeignet, häufig geöffnet und geschlossen zu werden.

Es besteht daher Bedarf an einer einfach zu bedienenden Schnellkupplung für Bowdenzüge.

Gelöst wird diese Aufgabe durch eine Bowdenzugkupplung, die die Merkmale des Patentanspruchs 1 aufweist, sowie eine Anordnung nach Patentanspruch 16. Bevorzugte Weiterbildungen sind Gegenstand der Unteransprüche. Weitere Vorteile und Merkmale der Erfindung ergeben sich aus der allgemeinen Beschreibung und der Beschreibung der Ausführungsbeispiele.

Die Erfindung betrifft eine Bowdenzugkupplung zum lösbaren Verkuppeln eines ersten Bowdenzugs mit einem zweiten Bowdenzug, aufweisend:
- eine erste Kupplungseinheit, wobei die erste Kupplungseinheit eine erste Führungsbuchse und eine erste Schiebereinheit aufweist, wobei die erste Schiebereinheit mit einer Seele des ersten Bowdenzugs verbunden ist, wobei die erste Führungsbuchse eine Durchgangsöffnung für die Seele des ersten Bowdenzugs aufweist, wobei die erste Schiebereinheit in der ersten Führungsbuchse in der axialen Richtung verschiebbar gelagert ist,
- eine zweite Kupplungseinheit, wobei die zweite Kupplungseinheit eine zweite Führungsbuchse und eine zweite Schiebereinheit aufweist, wobei die zweite Schiebereinheit mit einer Seele des zweiten Bowdenzugs verbunden ist, wobei die zweite Führungsbuchse eine Durchgangsöffnung für die Seele des zweiten Bowdenzugs aufweist, wobei die zweite Schiebereinheit in der zweiten Führungsbuchse in der axialen Richtung verschiebbar gelagert ist, und
- eine Kupplungshülse,
wobei die zweite Kupplungseinheit mit der Kupplungshülse verbunden ist, wobei die zweite Führungsbuchse in der axialen Richtung verschiebbar in der Kupplungshülse gelagert ist und die zweite Schiebereinheit lagefixiert mit der Kupplungshülse verbunden ist, wobei die erste Kupplungseinheit über einen Bajonettverschluss lösbar mit der Kupplungshülse verbunden ist, wobei die erste Schiebereinheit einen ersten Bestandteil des Bajonettverschlusses aufweist, die Kupplungshülse einen zu dem ersten Bestandteil korrespondierenden zweiten Bestandteil des Bajonettverschlusses aufweist, wobei die erste Kupplungseinheit in der axialen Richtung in die Kupplungshülse einsteckbar und durch Drehung in einer Drehrichtung um die axiale Richtung die erste Schiebereinheit in eine Verschlussposition des Bajonettverschlusses überführbar ist, wobei in der Verschlussposition die erste Führungsbuchse in der axialen Richtung verschiebbar in der Kupplungshülse gelagert ist und die erste Schiebereinheit mit der Kupplungshülse gekoppelt ist, sodass in der Verschlussposition, somit der Position, in der erste und zweite Schiebereinheit über die Kupplungshülse miteinander gekoppelt sind, Relativbewegungen der Schiebereinheiten gegenüber den Führungsbuchsen über die Kupplungshülse miteinander gekoppelt sind.

Durch das Vorsehen des Bajonettverschlusses ist einfaches, sicheres und schnelles Verkuppeln und Entkuppeln der ersten Kupplungseinheit und der Kupplungshülse möglich.

Es sind nun grundsätzlich zwei unterschiedliche Fälle hinsichtlich der Relativbewegung der Führungsbuchsen bezüglich der Kupplungshülse denkbar.

Im ersten Fall ist die Kupplungshülse feststehend. Beispielsweise könnte die Kupplungshülse an einer Komponente, beispielsweise einem Gestell oder Rahmen, feststehend, also ortsfest und unbeweglich, befestigt sein, an dem auch ein Betätigungselement zum Betätigen der gekoppelten Bowdenzüge oder ein über die gekoppelten Bowdenzüge zu betätigendes Funktionselement befestigt ist. Bei feststehender Kupplungshülse sind die Schiebereinheiten dann ebenfalls feststehend. Bei Betätigung der gekoppelten Bowdenzüge werden dann nicht die Schiebereinheiten und die mit diesen verbundenen Seelen bezüglich der Bowdenzughüllen bewegt, beispielsweise gezogen, da die Schiebereinheiten durch die Kupplungshülse festgelegt sind. Stattdessen werden die Bowdenzughüllen zusammen mit den Führungsbuchsen gegenüber den feststehenden Seelen und somit in der feststehenden Kupplungshülse entsprechend in axialer Richtung verschoben.

Im zweiten Fall ist die Kupplungshülse nicht feststehend. Bei nicht feststehender Kupplungshülse werden bei Betätigung der gekoppelten Bowdenzüge wie üblich die Seelen und somit die Schiebereinheiten bewegt, da die Bewegung der Schiebereinheiten über die Kupplungshülse miteinander gekoppelt sind. Die Kupplungshülse wird daher beim Betätigen gegenüber den Führungsbuchsen verschoben.

Der Begriff "axiale Richtung" ist vorliegend insbesondere identisch mit der Längserstreckungsrichtung der Seele. In der Regel wird der jeweilige Bowdenzug und somit auch die jeweilige Seele gekrümmt geführt sein. Die axiale Richtung bezieht sich dann dabei auf die Längserstreckungsrichtung der Seele in dem entsprechenden Bereich der Seele.

Es wird als vorteilhaft angesehen, wenn die zweite Kupplungseinheit unlösbar mit der Kupplungshülse verbunden ist. Dadurch wird die Handhabung vereinfacht und ein Verlieren der Kupplungshülse wird vermieden. Es ist aber auch grundsätzlich denkbar, dass die zweite Kupplungseinheit ebenfalls über einen Bajonettverschluss mit der Kupplungshülse verbunden ist.

Als besonders vorteilhaft wird es angesehen, wenn die jeweilige Führungsbuchse ein Gegenlager für die Bowdenzughülle des jeweiligen Bowdenzugs bildet.

In einer besonders bevorzugten Ausführungsform ist vorgesehen, dass sich die Führungsbuchsen zumindest beim Betätigen der Bowdenzüge in der axialen Richtung aneinander abstützen. Ein gewisses Spiel zwischen den Führungsbuchsen hat sich hinsichtlich einer Vereinfachung des Verkuppelns und Entkuppelns als vorteilhaft erwiesen.

Vorzugsweise ist die Kupplungshülse zylinderförmig, insbesondere kreiszylinderförmig, ausgebildet.

In einer bevorzugten Ausführungsform weist die erste Schiebereinheit gegenüber der ersten Führungsbuchse nach radial außen hervorstehende Vorsprünge auf, wobei diese Vorsprünge den ersten Bestandteil des Bajonettverschlusses bilden. In diesem Zusammenhang wird es als besonders vorteilhaft angesehen, wenn die Kupplungshülse zu den Vorsprüngen korrespondierende Schlitze oder Nuten aufweist, die den zweiten Bestandteil des Bajonettverschlusses bilden. Vorzugsweise weist ein solcher Schlitz einen von einem Einschubende der Kupplungshülse ausgehenden in der axialen Richtung verlaufenden Längsschlitz auf, der an dessen hinterem geschlossenen Ende in einen Querschlitz übergeht.

In einer vorteilhaften Weiterbildung weist die erste Schiebereinheit einen in der ersten Führungsbuchse axial geführten Grundkörper auf, wobei die erste Schiebereinheit einen Sicherungsstift aufweist zum Sichern des Grundkörpers gegen ein Herausfallen aus der ersten Führungsbuchse, wobei der Sicherungsstift den Grundkörper und die erste Führungsbuchse quer zu der axialen Richtung durchsetzt und wobei gegenüberliegende Enden des Sicherungsstifts die nach radial außen gegenüber der ersten Führungsbuchse hervorstehenden Vorsprünge des Bajonettverschlusses bilden.

In einer bevorzugten Ausführungsform weist die zweite Schiebereinheit wie die erste Schiebereinheit einen in der zweiten Führungsbuchse axial geführten Grundkörper auf, wobei die zweite Schiebereinheit ebenfalls einen Sicherungsstift aufweist zum Sichern des Grundkörpers gegen ein Herausfallen aus der zweiten Führungsbuchse, wobei der Sicherungsstift den Grundkörper und die zweite Führungsbuchse quer zu der axialen Richtung durchsetzt. Im Gegensatz zu der ersten Schiebereinheit ist bei der zweiten Schiebereinheit vorgesehen, dass die gegenüberliegende Enden des Sicherungsstifts formschlüssig in gegenüberliegenden Aufnahmeöffnungen der Kupplungshülse aufgenommen sind. Ein Lösen oder ein Bajonettverschluss ist hier nicht vorgesehen.

Die Verwendung eines Grundkörpers und eines Sicherungsstifts bietet Vorteile bei der Montage. So kann zunächst der Grundkörper axial in die Führungsbuchse eingesetzt werden und dann durch Einstecken des Sicherungsstifts gegen ein Herausfallen gesichert werden. Grundsätzlich ist es denkbar, dass im montierten Zustand eine Presspassung zwischen Sicherungsstift und Grundkörper vorliegt, sodass die Schiebereinheit nur mit hohem Kraftaufwand demontierbar ist. Allerdings wird es vor dem Hintergrund einer möglichst einfachen Montage als vorteilhaft angesehen, wenn der Sicherungsstift und der Grundkörper über die jeweilige Bowdenzugseele in Verbindung gehalten werden. Zu diesem Zweck ist in einer bevorzugten Ausführungsform vorgesehen, dass die Seele des Bowdenzugs sowohl den Grundkörper als auch den Sicherungsstift durchsetzt. Zu diesem Zweck weisen der Grundkörper und der Sicherungsstift Durchgangsöffnungen auf, wobei die Seele im montierten Zustand diese Durchgangsöffnungen durchsetzt. Dadurch wird durch die Seele verhindert, dass der Sicherungsstift im montierten Zustand aus dem Grundkörper herausgeschoben werden kann bzw. herausfallen kann. Die Montage der Kupplungseinheit kann wie folgt erfolgen: Zunächst wird der Grundkörper in der axialen Richtung in die Führungsbuchse eingesteckt. Dann wird der Sicherungsstift in den Grundkörper eingesteckt, vorzugsweise quer zu der axialen Richtung, um den Grundkörper gegen ein Herausfallen aus der Führungsbuchse zu sichern. Der Sicherungsstift wird derart eingesteckt, dass die Durchgangsöffnungen von Sicherungsstift und Grundkörper fluchten. Dann wird die Seele eingefädelt, derart, dass die Seele die fluchtenden Durchgangsöffnungen von Grundkörper und Sicherungsstift und die Durchgangsöffnung der Führungsbuchse durchsetzt.

Eine Verbindung zwischen der jeweiligen Schiebereinheit und der jeweiligen Seele erfolgt vorzugsweise über ein mit der Seele verbundenes Haltenippel und einem in der Schiebereinheit ausgebildeten korrespondierenden Nippellager. Dabei wird es bei einer Ausführungsform mit einem Sicherungsstift und einem Grundkörper als besonders vorteilhaft angesehen, wenn der Sicherungsstift und der Grundkörper in axialer Richtung aneinander angrenzende Teilbereiche des Nippellagers bilden. Wenn der Haltenippel in dem Nippellager angeordnet ist, sichert der Haltenippel dadurch den Sicherungsstift in dem Grundkörper.

In einer bevorzugten Ausführungsform ist vorgesehen, dass die erste Schiebereinheit in der ersten Führungsbuchse in der axialen Richtung zwischen einer der zweiten Kupplungseinheit zugewandten proximalen Endstellung und einer zweiten Kupplungseinheit abgewandten distalen Endstellung verschiebbar ist und/oder wobei die zweite Schiebereinheit in der zweiten Führungsbuchse in der axialen Richtung zwischen einer der ersten Kupplungseinheit zugewandten proximalen Endstellung und einer ersten Kupplungseinheit abgewandten distalen Endstellung verschiebbar ist. Dabei wird es als besonders vorteilhaft angesehen, wenn die jeweilige Führungsbuchse einen endseitig geschlossenen Führungsschlitz aufweist, in dem die jeweilige Schiebereinheit in der axialen Richtung geführt ist. Dadurch ist die jeweilige Schiebereinheit verliersicher in der jeweiligen Führungsbuchse gelagert und geführt.

In einer vorteilhaften Weiterbildung ist vorgesehen, dass die erste Kupplungseinheit ein Rückstellelement aufweist, wobei ein Verschieben der ersten Schiebereinheit in Richtung der distalen Endstellung entgegen der Rückstellkraft des Rückstellelements erfolgt und/oder wobei die zweite Kupplungseinheit ein Rückstellelement aufweist, wobei ein Verschieben der zweiten Schiebereinheit in Richtung der proximalen Endstellung entgegen der Rückstellkraft des Rückstellelements erfolgt. Dadurch wird erreicht, dass sich der erste Bowdenzug und ein mit dem ersten Bowdenzug verbundenes Bedienelement im ungekoppelten Zustand und unbetätigtem Zustand dennoch vorgespannt ist. Dadurch wird das Verkuppeln erleichtert, da die erste Schiebereinheit in Einsteckrichtung möglichst weit vorne positioniert ist und aufgrund der Rückstellkraft auch lagestabil ist. Hinsichtlich der zweiten Schiebereinheit hat das Rückstellelement die Wirkung, dass sich das Funktionselement im ungekoppelten Zustand in einer unbetätigten Stellung gehalten wird.

Bei dem Rückstellelement handelt es sich vorzugsweise um eine mechanische Feder, vorzugsweise eine Schraubenfeder, wobei die Schraubenfeder die Seele des jeweiligen Bowdenzugs umlaufend umschließt bzw. die Seele die Schraubenfeder durchsetzt.

Grundsätzlich können beide Kupplungseinheiten ein Rückstellelement aufweisen. Es wird allerdings als vorteilhaft angesehen, wenn lediglich eine der Kupplungseinheiten, vorzugsweise die erste Kupplungseinheit, ein Rückstellelement aufweist. Vorzugsweise ist der Bowdenzug dieser Kupplungseinheit mit einem Betätigungselement, beispielsweise einem Bremshebel, verbunden. Ein Rückstellelement ist hingegen in der Regel bei der Kupplungseinheit, die mit dem zu betätigenden Funktionselement, bspw. in Form einer Bremse, verbunden ist, nicht notwendig, da Funktionselemente in der Regel bereits über entsprechende Rückstellelemente verfügen.

Vorzugsweise weist die erste und/oder die zweite Schiebereinheit, insbesondere der Grundkörper der jeweiligen Schiebereinheit, ein Sackloch zur Aufnahme des Rückstellelements auf.

Um möglichst wenig unterschiedliche Bauteile zur Verwirklichung der Bowdenzugkupplung zu benötigen, wird es als vorteilhaft angesehen, wenn die Schiebereinheiten und/oder die Führungsbuchsen und/oder die Kupplungseinheiten jeweils identisch ausgebildet sind.

Die erfindungsgemäße Anordnung weist ein Betätigungselement, bspw. in Form eines Bremshebels, und ein mit dem Betätigungselement betätigbares Funktionselement, beispielsweise in Form einer Bremse, auf, wobei die Anordnung eine erste Komponente und eine von der ersten Komponente demontierbare oder bezüglich der ersten Komponente abklappbar zweite Komponente aufweist, wobei an der ersten Komponente das Betätigungselement angebracht ist und an der zweiten Komponente das Funktionselement angebracht ist, wobei das Betätigungselement und das Funktionselement über die erfindungsgemäße Bowdenzugkupplung oder eine der vorgenannten vorteilhaften Ausführungsform der Bowdenzugkupplung miteinander wirkverbunden sind, wobei die Kupplungshülse ortsfest an der zweiten Komponente angebracht ist. Insofern ist bei dieser Gestaltung der vorbeschriebene erste Fall verwirklicht, bei der die Kupplungshülse feststehend ist.

In einer bevorzugten Ausführungsform handelt es sich bei dem Betätigungselement um einen Bremshebel und bei dem Funktionselement um eine Bremse.

Vorzugsweise handelt es sich bei den Komponenten um Komponenten eines Fahrrads, insbesondere eines Klappfahrrads, eines Kinderwagens, eines Rollstuhls oder eines Therapiestuhls.

Vorzugsweise handelt es sich bei der ersten Komponente um einen Lenker oder einen Griff und bei der zweiten Komponente um einen Grundkörper mit Rädern.

In den nachfolgenden Figuren wird die Erfindung anhand von Ausführungsbeispielen näher erläutert, ohne auf diese beschränkt zu sein. Es zeigen:
- Fig. 1: eine Bowdenzugkupplung mit einer ersten Kupplungseinheit eines ersten Bowdenzugs, einer zweien Kupplungseinheit eines zweiten Bowdenzugs und einer Kupplungshülse zum Verkuppeln der Kupplungseinheiten, in einem gekoppelten Zustand,
- Fig. 2: die Bowdenzugkupplung gemäß Fig. 1 in einem entkoppelten Zustand,
- Fig. 3: die erste Kupplungseinheit der Bowdenzugkupplung gemäß Fig. 1,
- Fig. 4: die Kupplungshülse der Bowdenzugkupplung gemäß Fig. 1,
- Fig. 5: die zweite Kupplungseinheit der Bowdenzugkupplung gemäß Fig. 1,
- Fig. 6: die Bowdenzugkupplung gemäß Fig. 1 in einem unbetätigten Zustand,
- Fig. 7: die Bowdenzugkupplung gemäß Fig. 1 in einem betätigten Zustand,
- Fig. 8: die Bowdenzugkupplung gemäß Fig. 6 in einer Darstellung ohne Kupplungshülse,
- Fig. 9: die Bowdenzugkupplung gemäß Fig. 7 in einer Darstellung ohne Kupplungshülse,
- Fig. 10: die erste Kupplungseinheit in einer Explosionsdarstellung,
- Fig. 11: die erste Kupplungseinheit Schnittdarstellung gemäß der Linie A-A in Fig. 10,
- Fig. 12: Komponenten der ersten Kupplungseinheit in einem montierten Zustand,

- Fig. 13: Teilkomponenten eines Fahrrads mit einer Bowdenzugkupplung.

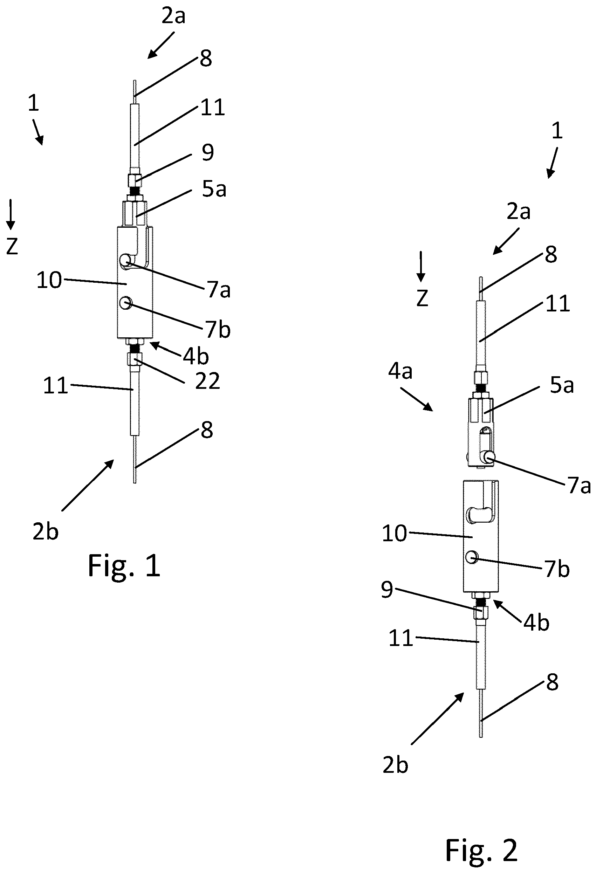

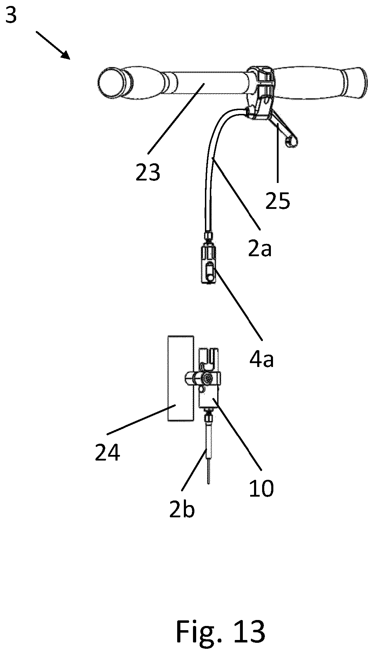

Die Figuren 1 bis 11 zeigen eine Bowdenzugkupplung 1 zum lösbaren Verkuppeln bzw. Verbinden eines ersten Bowdenzugs 2a mit einem zweiten Bowdenzug 2b. Im verkuppelten Zustand bilden die beiden Bowdenzügen 2a, 2b einen funktionalen Bowdenzug. Die Bowdenzugkupplung 1 ermöglicht es, ein Betätigungselement und ein mit dem Betätigungselement zu betätigendes Funktionselement, wie beispielsweise einen Bremshebel und eine Bremse, die über beiden Bowdenzüge 2a, 2b miteinander wirkverbunden sind, schnell und unkompliziert voneinander zu trennen und wieder miteinander zu verbinden, beispielsweise um eine schnelle Demontage und Montage zu erreichen und/oder Klappfunktionen, wie beispielsweise bei einem Klappfahrrad, ohne Behinderung durch den Bowdenzug zu erreichen. Beispielhaft ist in der Fig. 13 die Verwendung der Bowdenzugkupplung 1 an einem Fahrrad 3 gezeigt. Dabei ist der erste Bowdenzug 2a mit einem Bremshebel 24 verbunden, der an einem Lenker 23 des Fahrrads 3 angebracht ist. Der zweite Bowdenzug ist mit einer nicht näher dargestellten Bremse verbunden, die an einem Fahrradrahmen des Fahrrads 3 angebracht ist. Von dem Fahrradrahmen ist lediglich ein Teilbereich eines Steuerrohrs 24 dargestellt. Das Verkoppeln und Entkoppeln der beiden Bowdenzüge 2a, 2b erfolgt durch eine manuelle Steck-Dreh- bzw. Dreh-Zieh-Bewegung, die nachfolgend noch detailliert beschrieben wird.

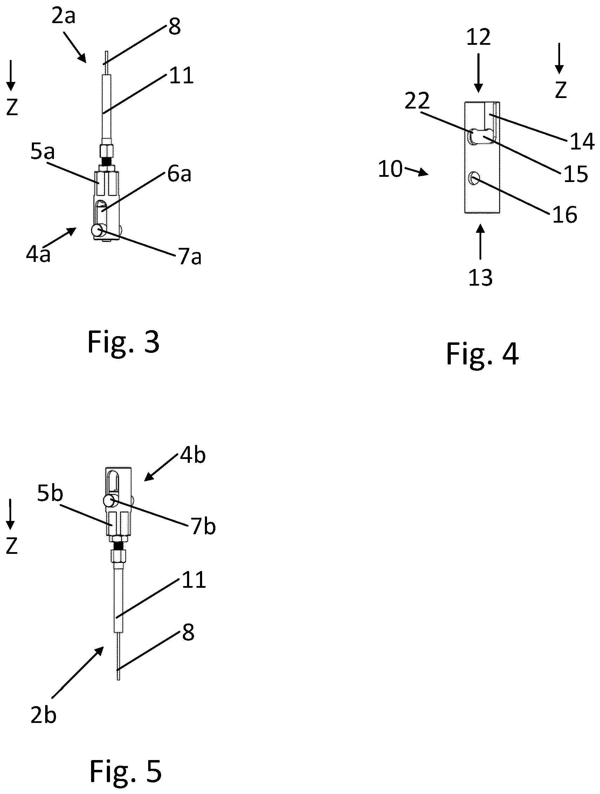

Die Bowdenzugkupplung 1 umfasst eine erste Kupplungseinheit 4a, die mit dem ersten Bowdenzug 2a verbunden ist und eine zweite Kupplungseinheit 4b, die mit dem zweiten Bowdenzug 2b verbunden ist. Die beiden Kupplungseinheiten 4a, 4b sind über eine Kupplungshülse 10, miteinander verbunden, wodurch der erste Bowdenzug 2a und der zweite Bowdenzug 2b miteinander zu einem funktionalen Bowdenzug verbunden sind. Die Bestandteile der Bowdenzugkupplung 1, nämlich die erste Kupplungseinheit 4a, die zweite Kupplungseinheit 4b und die Kupplungshülse 10 sind in den Figuren 3 bis 5 separat dargestellt.

Die erste Kupplungseinheit 4a weist eine erste Führungsbuchse 5a auf. Die erste Führungsbuchse 5a bildet ein Gegenlager für eine Bowdenzughülle 11, die die Seele 8 des ersten Bowdenzugs 2a umschließt, wobei mit der ersten Führungsbuchse 5a eine Stellschraube 9 verbunden ist, wobei über diese Stellschraube 9 eine wirksamen Länge der die Seele 8 umschließenden Bowdenzughülle 11 des ersten Bowdenzugs 2a einstellbar ist. Die Seele 8 des ersten Bowdenzugs 2a durchsetzt die Stellschraube 9 und die erste Führungsbuchse 5a in einer axialen Richtung Z, die der Längserstreckungsrichtung des ersten Bowdenzugs 2a entspricht. Mit der Seele 8 des ersten Bowdenzugs 2a ist eine erste Schiebereinheit 6a, 7a verbunden, die in der ersten Führungsbuchse 5a in der axialen Richtung Z verschiebbar gelagert ist. Die erste Schiebereinheit 6a, 7a ist mehrteilig ausgebildet und weist einen innerhalb der ersten Führungsbuchse 5a axial geführten Grundkörper 6a und einen Sicherungsstift 7a zum Sichern des Grundkörpers 6a gegen ein Herausfallen aus der ersten Führungsbuchse 5a auf. Der Sicherungsstift 7a durchsetzt den Grundkörper 6a quer zu der axialen Richtung Z, wobei die gegenüber dem Grundkörper 6a hervorstehenden Abschnitte des Sicherungsstifts 7a gegenüberliegende, in axialer Richtung Z verlaufende Führungsschlitz 19 der ersten Führungsbuchse 5a durchsetzen und in Querrichtung, somit nach radial außen, gegenüber der ersten Führungsbuchse 5a hervorstehen.

Die Befestigung der Seele 8 mit der ersten Schiebereinheit 6a, 7a erfolgt über ein mit der Seele 8 des ersten Bowdenzugs 2a verbundenen Haltenippel 20, wobei die ersten Schiebereinheit 6a, 7a ein zu dem Haltenippel 20 korrespondierendes Nippellager 18 aufweist. Das Nippellager 18 in der Schiebereinheit 6a, 7a bildet ein Gegenlager für den Haltenippel 20 bei Belastung des Bowdenzugs auf Zug, wobei das Nippellager 18 den Haltenippel 20 formschlüssig aufnimmt. An das Nippellager 18 grenzt eine Durchgangsöffnung an, wobei die Seele 8 des ersten Bowdenzugs 2a durch die Durchgangsöffnung hindurchgeführt ist.

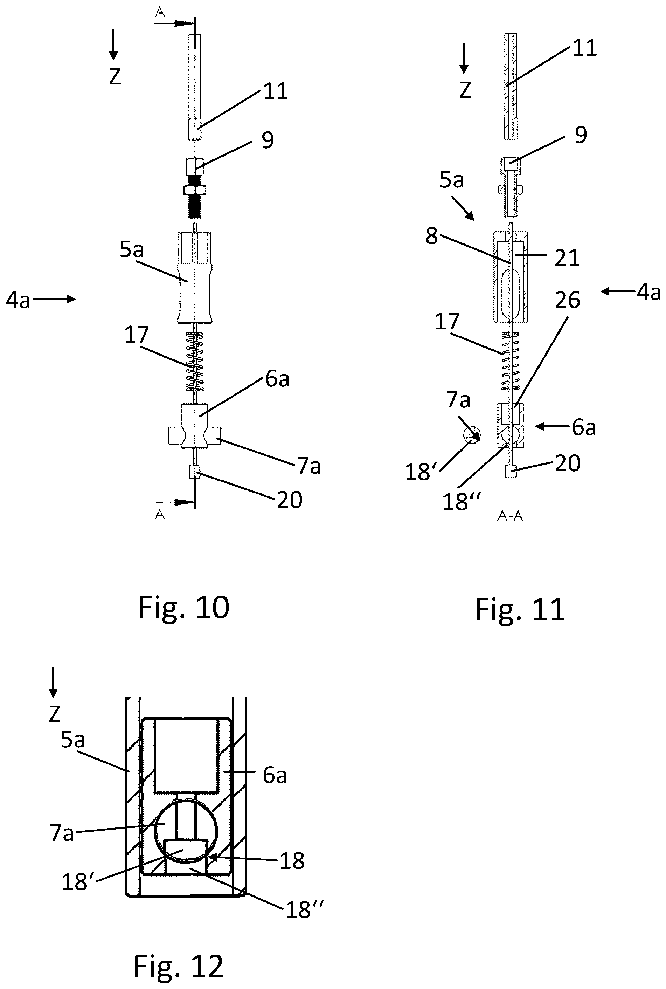

Die Montage der ersten Kupplungseinheit 4a erfolgt vorliegend folgendermaßen: Zunächst wird der Grundkörper 6a in die erste Führungsbuchse 5a eingesteckt. Dann wird der Sicherungsstift 7a senkrecht zu der axialen Richtung Z in den Grundkörper 7a eingesteckt, um den Grundkörper 6a gegen ein Herausfallen aus der ersten Führungsbuchse 5a zu sichern. Der Grundkörper 6a und der Sicherungsstift 7a weisen jeweils eine Durchgangsöffnung für die Seele 8 des ersten Bowdenzugs 2a auf. Bei der Montage wird der Sicherungsstift 7a derart eingesteckt, dass die Durchgangsöffnung des Sicherungsstifts 7a und die Durchgangsöffnung des Grundkörpers 6a fluchten. Zwangsläufig fluchten diese Durchgangsöffnungen dann auch mit der Durchgangsöffnung der ersten Führungsbuchse 5a. Dann wird die Seele 8 eingefädelt, derart, dass die Seele 8 die fluchtenden Durchgangsöffnungen von Grundkörper 6a, Sicherungsstift 7a und erster Führungsbuchse 8a durchsetzt. Dieser Zustand ist in der Fig. 11 dargestellt, wobei aus Gründen der Übersicht der Sicherungsstift 7a in der Fig. 11 gegenüber seiner eigentlich Position nach links versetzt dargestellt ist. Die Fig. 12 zeigt die Anordnung von Führungsbuchse 5a, Grundkörper 6a und Sicherungsstift 7a ohne Versatz in einem Zustand nach dem Einstecken des Sicherungsstifts 7a in den Grundkörper 6a und vor dem Einfädeln der Seele 8.

Der Sicherungsstift 7a und der Grundkörper 6a weisen in der axialen Richtung Z aneinander angrenzende Teilbereiche 18', 18"auf, die das Nippellager 18 bilden. Im montierten Zustand ist der Haltenippel 20 teilweise in dem in dem Sicherungsstift 7a ausgebildeten Teilbereich 18' und teilweise in dem in dem Grundkörper 6a ausgebildeten Teilbereich 18" des Nippellagers 18 angeordnet. Dadurch kann der Sicherungsstift 7a nicht mehr aus dem Grundkörper 6a herausgezogen werden bzw. herausfallen.

Die zweite Kupplungseinheit 4b ist im Wesentlichen identisch wie die erste Kupplungseinheit 4a ausgebildet und weist analog zu der ersten Kupplungseinheit 4a eine zweite Führungsbuchse 5b und eine zweite Schiebereinheit 6b, 7b mit einem Grundkörper 6b und einem Sicherungsstift 7b auf, wobei die Seele 8 des zweiten Bowdenzugs 2b mit der zweiten Schiebereinheit 6b, 7b in gleicher Art wie die Seele des ersten Bowdenzugs 2a mit der ersten Schiebereinheit 6a, 7a verbunden ist.

Das Verkuppeln der beiden Bowdenzüge 2a, 2b miteinander erfolgt über die Kupplungshülse 10. Die Kupplungshülse 10 ist im Wesentlichen hohlzylindrisch ausgebildet und an in der axialen Richtung Z gegenüberliegenden Enden 12, 13 offen. In dem einen Ende 13 ist die zweite Kupplungseinheit 4b angeordnet und unlösbar mit der Kupplungshülse 10 verbunden, derart, dass die zweite Führungsbuchse 5b in der axialen Richtung Z verschiebbar in der Kupplungshülse 10 gelagert ist und die zweite Schiebereinheit 6b, 7b lagefixiert mit der Kupplungshülse 10 verbunden ist. Zu diesem Zweck weist die Kupplungshülse 10 durch eine Querbohrung 16 gebildete Aufnahmeöffnungen auf, wobei die gegenüberliegenden Enden des Sicherungsstifts 7b in der Querbohrung 16 lagefixiert und unlösbar gelagert sind, wodurch die zweite Kupplungseinheit 4b unlösbar mit der Kupplungshülse 10 verbunden ist. Eine Lösbarkeit durch den Verwender ist zumindest nicht vorgesehen.

Im Gegensatz zu der zweiten Kupplungseinheit 4b ist die erste Kupplungseinheit 4a lösbar mit der Kupplungshülse 10 verbunden, nämlich über einen Bajonettverschluss. Das Verbinden und Lösen bzw. Verkuppeln und Entkuppeln erfolgt dementsprechend durch eine manuelle Steck-Dreh- bzw. Dreh-Zieh-Bewegung. Zu diesem Zweck weist die erste Schiebereinheit 6a, 7a einen ersten Bestandteil des Bajonettverschlusses auf, der durch die gegenüberliegenden Enden des Sicherungsstifts 7a gebildet ist, die in radialer Richtung nach außen gegenüber der ersten Führungsbuchse 5a hervorstehen. Die Kupplungshülse 10 weist den zu den Vorsprüngen korrespondierenden, zweiten Bestandteil des Bajonettverschlusses auf, vorliegend in Form von gegenüberliegenden, von dem Ende 12 ausgehenden, in der axialen Richtung Z verlaufenden Längsschlitzen 14 und einem an den jeweiligen Längsschlitz 14 angrenzenden Querschlitz 15. Dadurch ergibt sich insgesamt jeweils ein L-förmiger Schlitz. Am Ende des Querschlitzes 15 geht dieser in eine Querbohrung 22 über, wobei die Querbohrung 22 einen größeren Durchmesser aufweist als die Querbohrung 16 für den Sicherungsstift 7b der zweiten Kupplungseinheit 4b. Zum Verbinden der ersten Kupplungseinheit 4a wird diese in der in der Fig. 2 dargestellten Drehstellung in der axialen Richtung Z in die Kupplungshülse 10 eingesteckt und durch Drehen der ersten Kupplungseinheit 4a um die axiale Richtung Z die erste Schiebereinheit 6a, 7a in die Verschlussposition des Bajonettverschlusses überführt, die in der Fig. 1 gezeigt ist. In der Verschlussposition ist die erste Führungsbuchse 5a in der axialen Richtung Z verschiebbar in der Kupplungshülse 10 gelagert, wohingegen die erste Schiebereinheit 6a, 7a mit der Kupplungshülse 10 in axialen Richtung Z gekoppelt ist. Für eine bessere Griffigkeit weist das der Stellschraube 9 zugewandte Ende der ersten Führungsbuchse 5a eine Sechskantfläche auf. Eine gute Griffigkeit könnte z.B. auch durch Rändelung dieses Bereiches erzielt werden.

Der Abstand der Querbohrungen 16 und 22 der Kupplungshülse 10 zueinander ist so gewählt, dass beim Einstecken der ersten Kupplungseinheit 4a in die Kupplungshülse 10 die erste Kupplungseinheit 4a gegen die zweite Kupplungseinheit 4b gedrückt werden muss, um die zweite Führungsbuchse 5b soweit zu verschieben, dass der Sicherungsstift 7a der ersten Schiebereinheit 6a, 7a in die größere Querbohrung 22 eingerastet werden kann. Da der den Sicherungsstift 7a führende L-förmige Schlitz 14, 15 deutlich schmaler ist als der Durchmesser der Querbohrung 22, wird der Sicherungsstift 7a und somit die erste Schiebereinheit 6a, 7a durch den Gegendruck der zweiten Schiebereinheit 4b an den der zweiten Schiebereinheit 4b abgewandten Rand der Querbohrung 22 gedrückt und ist somit mit der Kupplungshülse 10 verrastet. Durch den Gegendruck der zweiten Kupplungseinheit 4b wird ein ungewolltes Lösen verhindert. Bei Zugbelastung auf die Seele 8 des ersten Bowdenzugs 2a stützt sich der Sicherungsstift 6a ebenfalls an diesem Rand ab. In der dargestellten Ausführung weist die Querbohrung 22 einen um ca. 2mm größeren Durchmesser auf als die Breite des L-förmigen Schlitzes 14, 15. Somit bleibt einerseits der Kraftaufwand beim Koppeln und Entkoppeln relativ gering und andererseits wird durch den Rastweg von 1mm ein ungewolltes Entkoppeln verhindert.

Die erste Schiebereinheit 6a, 7a der ersten Kupplungseinheit 4a ist in dem Führungsschlitz 19 der ersten Führungsbuchse 5a zwischen einer der zweiten Kupplungseinheit 4b zugewandten proximalen Endstellung und einer der zweiten Kupplungseinheit 4b abgewandten distalen Endstellung linear geführt. Entsprechendes gilt für die zweite Schiebereinheit 6b, 7b der zweiten Kupplungseinheit 4b. Im Gegensatz zu der zweiten Kupplungseinheit 4b weist die erste Kupplungseinheit 4a ein auf die erste Schiebereinheit 6a, 7a einwirkendes Rückstellelement in Form einer Druckfeder 17 auf. Die Druckfeder 17 ist in einem Sackloch 21 der ersten Führungsbuchse 5a und einem Sackloch 26 des Grundkörpers 6a gelagert, wobei die Seele 8 die Druckfeder 17 in der axialen Richtung Z durchsetzt. Ein Verschieben der ersten Schiebereinheit 6a, 7a in Richtung der distalen Endstellung erfolgt entgegen der Rückstellkraft der Druckfeder 17. Die Druckfeder 17 sorgt daher dafür, dass der erste Bowdenzug 2a im entkoppelten Zustand vorgespannt bleibt, wodurch der Haltenippel 20 im Nippellager 18 verbleibt. Dies ist insbesondere dann von Vorteil, wenn der erste Bowdenzug 2a mit einem Betätigungselement, z.B. einem Bremshebel 25 wie in Fig. 12, verbunden ist, das kein eigenes Rückstellelement aufweist. Hingegen ist ein Rückstellelement in der zweiten Kupplungseinheit nicht notwendig, da in der Regel ein zu betätigendes Funktionselement, z.B. einer Scheibenbremse, ein entsprechendes Rückstellelement aufweist.

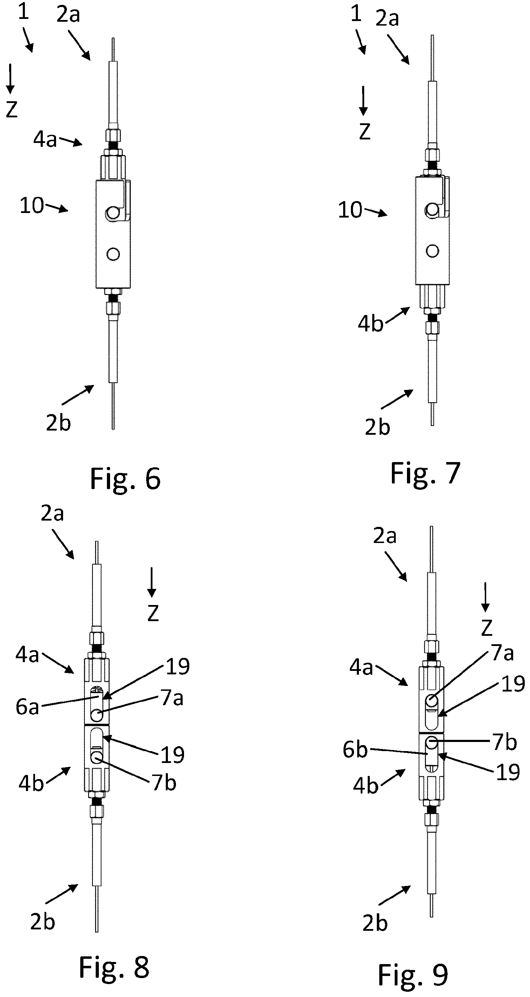

Die Funktionsweise der Bowdenzugkupplung 1 wird nachfolgend anhand der Figu-ren 6 bis 9 näher erläutert. Die Figuren 6 und 8 zeigen die Bowdenzugkupplung 1 in einem gekoppelten unbetätigten Zustand. Aufgrund der Druckfeder 17 und der Rückstellkräfte des mit dem zweiten Bowdenzug 2b verbundenen Funktionselements befindet sich die erste Schiebereinheit 6a, 7a im unbetätigten Zustand in der proximalen Endstellung und die zweite Schiebereinheit 6b, 7b in der distalen Endstellung, wie insbesondere aus der Fig. 8 hervorgeht. Da sich die Führungsbuchsen 5a, 5b aneinander abstützen, wie insbesondere aus den Fig. 8 und 9 hervorgeht, verschiebet sich beim Betätigen der gekoppelten Bowdenzüge 2a, 2b die erste Schiebereinheit 6a, 7a in die distale Endstellung und aufgrund der Kopplung über die Kupplungshülse 10 die zweite Schiebereinheit 6b, 7b dementsprechend in die proximale Endstellung, wie dies aus den Fig. 8 und 9 hervorgeht. Dadurch wird das mit dem zweiten Bowdenzug 2b verbundene Funktionselement, beispielsweise eine Scheibenbremse, betätigt. Da die Kupplungshülse 10 der Bewegung der Schiebereinheiten 6a, 7a bzw. 6b, 7b folgt, verschiebt sich die Kupplungshülse 10 relativ zu den Führungsbuchsen 5a, 5b, wie dies auch aus einem Vergleich der Fig. 6 mit der Fig. 7 ersichtlich ist.

Grundsätzlich ist es denkbar, dass die Kupplungshülse 10 verschiebbar ist und die Bowdenzughüllen 11 feststehend sind. Vor dem Hintergrund eines einfachen Ver- und Entkuppelns wird es allerdings als vorteilhaft angesehen, wenn die Kupplungshülse 10 feststehend ist, beispielsweise an einem Steuerrohr 24 des Fahrradrahmens befestigt ist, wie dies beispielhaft in der Figur 13 gezeigt ist. Bei feststehender Kupplungshülse 10 sind die Schiebereinheiten 6a, 7a, 6b, 7b festgelegt und es werden dann bei Betätigung der gekoppelten Bowdenzüge 2a, 2b nicht wie üblich die Seelen 8 relativ zu den Bowdenzughüllen 11 bewegt, da die Position der Schiebereinheiten 6a, 7a, 6b, 7b durch die feststehende Kupplungshülse 10 festgelegt sind, sondern stattdessen die Bowdenzughüllen 11 entsprechend gegenüber den feststehenden Seelen 8 verschoben, da sich bei Betätigung der Bowdenzüge 2a, 2b die Führungsbuchsen 5a, 5b relativ zu der feststehenden Kupplungshülse 10 verschieben. Beide Möglichkeiten, nämliche verschiebbare Kupplungshülse 10 und feststehende Kupplungshülse 10, führen zu dem gleichen Ergebnis, nämlich zu einer Relativbewegung der Führungsbuchsen 5a, 5b und der Kupplungshülse 10 zueinander.

### Bezugszeichenliste

- 1: Bowdenzugkupplung
- 2a: erster Bowdenzug
- 2b: zweiter Bowdenzug
- 3: Fahrrad
- 4a: erste Kupplungseinheit
- 4b: zweite Kupplungseinheit
- 5a: erste Führungsbuchse
- 5b: zweite Führungsbuchse
- 6a: Grundkörper
- 6b: Grundkörper
- 7a: Sicherungsstift
- 7b: Sicherungsstift
- 8: Seele
- 9: Stellschraube
- 10: Kupplungshülse
- 11: Bowdenzughülle
- 12: Ende
- 13: Ende
- 14: Längsschlitz
- 15: Querschlitz
- 16: Querbohrung
- 17: Druckfeder
- 18: Nippellager
- 18': Teilbereich
- 18": Teilbereich
- 19: Führungsschlitz
- 20: Haltenippel
- 21: Sackloch
- 22: Querbohrung
- 23: Lenker
- 24: Steuerrohr
- 25: Bremshebel
- 26: Sackloch

## Patentansprüche

1. Bowdenzugkupplung (1) zum lösbaren Verkuppeln eines ersten Bowdenzugs (2a) mit einem zweiten Bowdenzug (2b), aufweisend:
- eine erste Kupplungseinheit (4a), wobei die erste Kupplungseinheit (4a) eine erste Führungsbuchse (5a) und eine erste Schiebereinheit (6a, 7a) aufweist, wobei die erste Schiebereinheit (4a) mit einer Seele (8) des ersten Bowdenzugs (2a) verbunden ist, wobei die erste Führungsbuchse (5a) eine Durchgangsöffnung für die Seele (8) des ersten Bowdenzugs (2a) aufweist, wobei die erste Schiebereinheit (6a, 7a) in der ersten Führungsbuchse (5a) in axialer Richtung (Z) verschiebbar gelagert ist,
- eine zweite Kupplungseinheit (4b), wobei die zweite Kupplungseinheit (4b) eine zweite Führungsbuchse (5b) und eine zweite Schiebereinheit (6b, 7b) aufweist, wobei die zweite Schiebereinheit (6b, 7b) mit einer Seele (8) des zweiten Bowdenzugs (2b) verbunden ist, wobei die zweite Führungsbuchse (5b) eine Durchgangsöffnung für die Seele (8) des zweiten Bowdenzugs (2b) aufweist, wobei die zweite Schiebereinheit (6b, 7b) in der zweiten Führungsbuchse (5b) in axialer Richtung (Z) verschiebbar gelagert ist, und
- eine Kupplungshülse (10),
wobei die zweite Kupplungseinheit (4b) mit der Kupplungshülse (10) verbunden ist, wobei die zweite Führungsbuchse (5b) in der axialen Richtung (Z) verschiebbar in der Kupplungshülse (10) gelagert ist und die zweite Schiebereinheit (6b, 7b) lagefixiert mit der Kupplungshülse (10) verbunden ist, wobei die erste Kupplungseinheit (4a) über einen Bajonettverschluss lösbar mit der Kupplungshülse (10) verbunden ist, wobei die erste Schiebereinheit (6a, 7a) einen ersten Bestandteil des Bajonettverschlusses aufweist, die Kupplungshülse (10) einen zu dem ersten Bestandteil korrespondierenden zweiten Bestandteil des Bajonettverschlusses aufweist, wobei die erste Kupplungseinheit (4a) in der axialen Richtung (Z) in die Kupplungshülse (10) einsteckbar und durch Drehung in einer Drehrichtung um die axiale Richtung (Z) die erste Schiebereinheit (6a, 7a) in eine Verschlussposition des Bajonettverschlusses überführbar ist, wobei in der Verschlussposition die erste Führungsbuchse (5a) in der axialen Richtung (Z) verschiebbar in der Kupplungshülse (10) gelagert ist und die erste Schiebereinheit (6a, 7a) mit der Kupplungshülse (10) gekoppelt ist, sodass in der Verschlussposition Relativbewegungen der Schiebereinheiten (6a, 7a; 6b, 7b) gegenüber den Führungsbuchsen (5a; 5b) über die Kupplungshülse (10) miteinander gekoppelt sind.

2. Bowdenzugkupplung (1) nach Anspruch 1, wobei die jeweilige Führungsbuchse (5a, 5b) ein Gegenlager für eine Bowdenzughülle (11) des jeweiligen Bowdenzugs (2a, 2b) bildet.

3. Bowdenzugkupplung (1) nach einem der Ansprüche 1 bis 2, wobei sich die Führungsbuchsen (5a, 5b) in der axialen Richtung (Z) aneinander abstützen.

4. Bowdenzugkupplung (1) nach einem der Ansprüche 1 bis 3, wobei die erste Schiebereinheit (6a, 7a) gegenüber der ersten Führungsbuchse (5a) nach radial außen hervorstehende Vorsprünge aufweist, die den ersten Bestandteil des Bajonettverschlusses bilden, und die Kupplungshülse (10) zu den Vorsprüngen korrespondierende Schlitze aufweist, wobei der jeweilige Schlitz einen von einem Einschubende (12) ausgehenden in der axialen Richtung (Z) verlaufenden Längsschlitz (14) aufweist, der an dessen hinterem geschlossenen Ende in einen Querschlitz (15) übergeht.

5. Bowdenzugkupplung (1) nach Anspruch 4, wobei die erste Schiebereinheit (6a, 7a) einen in der ersten Führungsbuchse (5a) axial geführten Grundkörper (6a) aufweist, wobei die erste Schiebereinheit (6a, 7a) einen Sicherungsstift (7a) aufweist zum Sichern des Grundkörpers (6a) gegen ein Herausfallen aus der ersten Führungsbuchse (5a), wobei der Sicherungsstift (7a) den Grundkörper (6a) und die erste Führungsbuchse (5a) quer zu der axialen Richtung (Z) durchsetzt und wobei gegenüberliegende Enden des Sicherungsstifts (7a) die nach radial außen hervorstehenden Vorsprünge des Bajonettverschlusses bilden.

6. Bowdenzugkupplung (1) nach einem der Ansprüche 1 bis 5, wobei die zweite Schiebereinheit (6b, 7b) einen in der zweiten Führungsbuchse (5b) axial geführten Grundkörper (6b) aufweist, wobei die zweite Schiebereinheit (6b, 7b) einen Sicherungsstift (7b) aufweist zum Sichern des Grundkörpers (6b) gegen ein Herausfallen aus der zweiten Führungsbuchse (5b), wobei der Sicherungsstift (7b) den Grundkörper (6b) und die zweite Führungsbuchse (5b) quer zu der axialen Richtung (Z) durchsetzt und wobei gegenüberliegende Enden des Sicherungsstifts (7b) formschlüssig in gegenüberliegenden Aufnahmeöffnungen der Kupplungshülse (10) aufgenommen sind.

7. Bowdenzugkupplung (1) nach einem der Ansprüche 1 bis 6, wobei die zweite Kupplungseinheit (4b) unlösbar mit der Kupplungshülse (10) verbunden ist.

8. Bowdenzugkupplung (1) nach einem der Ansprüche 1 bis 7, wobei die erste Schiebereinheit (6a, 7a) in der ersten Führungsbuchse (5a) in der axialen Richtung (Z) zwischen einer der zweiten Kupplungseinheit (4b) zugewandten proximalen Endstellung und einer zweiten Kupplungseinheit (4b) abgewandten distalen Endstellung verschiebbar ist und/oder wobei die zweite Schiebereinheit (6b, 7b) in der zweiten Führungsbuchse (5b) in der axialen Richtung (Z) zwischen einer der ersten Kupplungseinheit (4a) zugewandten proximalen Endstellung und einer ersten Kupplungseinheit (4a) abgewandten distalen Endstellung verschiebbar ist.

9. Bowdenzugkupplung (1) nach Anspruch 8, wobei die erste Kupplungseinheit (4a) ein Rückstellelement aufweist, wobei ein Verschieben der ersten Schiebereinheit (6a, 7a) in Richtung der distalen Endstellung entgegen der Rückstellkraft des Rückstellelements erfolgt und/oder wobei die zweite Kupplungseinheit (4b) ein Rückstellelement aufweist, wobei ein Verschieben der zweiten Schiebereinheit (6b, 7b) in Richtung der proximalen Endstellung entgegen der Rückstellkraft des Rückstellelements erfolgt.

10. Bowdenzugkupplung (1) nach Anspruch 9, wobei lediglich die erste Kupplungseinheit (4a) ein Rückstellelement aufweist.

11. Bowdenzugkupplung (1) nach einem der Ansprüche 1 bis 10, wobei die erste Schiebereinheit (6a, 7a) ein Nippellager (18) und eine an das Nippellager (18) angrenzende in der axialen Richtung (Z) verlaufende Durchgangsöffnung aufweist, wobei die Seele (8) des ersten Bowdenzugs (2a) die Durchgangsöffnung durchsetzt und ein mit der Seele (8) des ersten Bowdenzugs (2a) verbundener Haltenippel (20) in dem Nippellager (18) gelagert ist und/oder wobei die zweite Schiebereinheit (6b, 7b) ein Nippellager (18) und eine an das Nippellager (18) angrenzende in der axialen Richtung (Z) verlaufende Durchgangsöffnung aufweist, wobei die Seele (8) des zweiten Bowdenzugs (2b) die Durchgangsöffnung durchsetzt und ein mit der Seele (8) des zweiten Bowdenzugs (2b) verbundener Haltenippel (20) in dem Nippellager (18) gelagert ist.

12. Bowdenzugkupplung (1) nach Anspruch 5 oder 6 und Anspruch 11, wobei der Sicherungsstift (7a; 7b) und der Grundkörper (6a, 6b) der ersten Kupplungseinheit (4a) und/oder der zweiten Kupplungseinheit (4b) in axialer Richtung (Z) aneinander angrenzende Teilbereiche (18', 18") des Nippellagers (18) bilden.

13. Bowdenzugkupplung (1) nach einem der Ansprüche 1 bis 12, wobei die erste Kupplungseinheit (4a) eine mit der ersten Führungsbuchse (5a) verbundene Stellschraube (9) aufweist, wobei über diese Stellschraube (9) eine wirksamen Länge einer die Seele (8) umschließenden Bowdenzughülle (11) des ersten Bowdenzugs (2a) einstellbar ist und/oder wobei die zweite Kupplungseinheit (4b) eine mit der zweiten Führungsbuchse (5b) verbundene Stellschraube (9) aufweist, wobei über diese Stellschraube (9) eine wirksamen Länge einer die Seele (8) umschließenden Bowdenzughülle (11) des zweiten Bowdenzugs (2b) einstellbar ist.

14. Bowdenzugkupplung (1) nach einem der Ansprüche 1 bis 13, wobei der erste Bowdenzug (2a) an seinem der ersten Kupplungseinheit (4a) abgewandten Ende mit einem Betätigungselement wirkverbunden ist, wobei das Betätigungselement ein Gegenlager für die Bowdenzughülle (11) bildet und bei einem Betätigen des Betätigungselements das Betätigungselement an der Seele (8) des ersten Bowdenzugs (2a) zieht.

15. Bowdenzugkupplung (1) nach einem der Ansprüche 1 bis 14, wobei die Schiebereinheiten (6a, 7a; 6b, 7b) und/oder die Führungsbuchsen (5a; 5b) und/oder die Kupplungseinheiten (4a; 4b) identisch ausgebildet sind.

16. Anordnung mit einem Betätigungselement, einem durch das Betätigungselement zu betätigenden Funktionselement und eine Bowdenzugkupplung (1) nach einem der Ansprüche 1 bis 15, wobei die Anordnung eine erste Komponente und eine von der ersten Komponente demontierbar zweite Komponente aufweist, wobei an der ersten Komponente das Betätigungselement angebracht ist und an der zweiten Komponente das Funktionselement angebracht ist, wobei das Betätigungselement und das zu betätigende Funktionselement über die Bowdenzugkupplung (1) miteinander wirkverbunden sind, wobei die Kupplungshülse (10) ortsfest an der zweiten Komponente angebracht ist.

## Claims

1. Bowden cable coupling (1) for releasably coupling a first Bowden cable (2a) to a second Bowden cable (2b), having:
- a first coupling unit (4a), wherein the first coupling unit (4a) has a first guide bushing (5a) and a first sliding unit (6a, 7a), wherein the first sliding unit (4a) is connected to a core (8) of the first Bowden cable (2a), wherein the first guide bushing (5a) has a passage opening for the core (8) of the first Bowden cable (2a), wherein the first sliding unit (6a, 7a) is mounted in the first guide bushing (5a) so as to be displaceable in the axial direction (Z),
- a second coupling unit (4b), wherein the second coupling unit (4b) has a second guide bushing (5b) and a second sliding unit (6b, 7b), wherein the second sliding unit (6b, 7b) is connected to a core (8) of the second Bowden cable (2b), wherein the second guide bushing (5b) has a passage opening for the core (8) of the second Bowden cable (2b), wherein the second sliding unit (6b, 7b) is mounted in the second guide bushing (5b) so as to be displaceable in the axial direction (Z), and
- a coupling sleeve (10),
wherein the second coupling unit (4b) is connected to the coupling sleeve (10), wherein the second guide bushing (5b) is mounted in the coupling sleeve (10) so as to be displaceable in the axial direction (Z), and the second sliding unit (6b, 7b) is connected to the coupling sleeve (10) so as to be positionally fixed, wherein the first coupling unit (4a) is releasably connected to the coupling sleeve (10) by way of a bayonet closure, wherein the first sliding unit (6a, 7a) has a first constituent part of the bayonet closure and the coupling sleeve (10) has a second constituent part of the bayonet closure that corresponds to the first constituent part, wherein the first coupling unit (4a) is insertable into the coupling sleeve (10) in the axial direction (Z) and the first sliding unit (6a, 7a) by rotating in a rotation direction about the axial direction (Z) is able to be transferred to a closure position of the bayonet closure, wherein in the closure position the first guide bushing (5a) is mounted in the coupling sleeve (10) so as to be displaceable in the axial direction (Z) and the first sliding unit (6a, 7a) is coupled to the coupling sleeve (10) in such a way that in the closure position relative movements of the sliding units (6a, 7a; 6b, 7b) in relation to the guide bushings (5a; 5b) are mutually coupled by way of the coupling sleeve (10).

2. Bowden cable coupling (1) according to Claim 1, wherein the respective guide bushing (5a, 5b) forms a counter bearing for a Bowden cable sleeve (11) of the respective Bowden cable (2a, 2b).

3. Bowden cable coupling (1) according to one of Claims 1 to 2, wherein the guide bushings (5a, 5b) are supported on one another in the axial direction (Z).

4. Bowden cable coupling (1) according to one of Claims 1 to 3, wherein the first sliding unit (6a, 7a) has protrusions that project radially outward in relation to the first guide bushing (5a) and form the first constituent part of the bayonet closure, and the coupling sleeve (10) has slots that correspond to the protrusions, wherein the respective slot has a longitudinal slot (14) which proceeds from an insertion end (12) and runs in the axial direction (Z) and on the rear closed end thereof transitions into a transverse slot (15).

5. Bowden cable coupling (1) according to Claim 4, wherein the first sliding unit (6a, 7a) has a main body (6a) which is guided axially in the first guide bushing (5a), wherein the first sliding unit (6a, 7a) has a locking pin (7a) for securing the main body (6a) against falling out of the first guide bushing (5a), wherein the locking pin (7a) penetrates the main body (6a) and the first guide bushing (5a) transversely to the axial direction (Z), and wherein opposite ends of the locking pin (7a) form the protrusions of the bayonet closure that protrude radially outward.

6. Bowden cable coupling (1) according to one of Claims 1 to 5, wherein the second sliding unit (6b, 7b) has a main body (6b) which is guided axially in the second guide bushing (5b), wherein the second sliding unit (6b, 7b) has a locking pin (7b) for securing the main body (6b) against falling out of the second guide bushing (5b), wherein the locking pin (7b) penetrates the main body (6b) and the second guide bushing (5b) transversely to the axial direction (Z), and wherein opposite ends of the locking pin (7b) are received in a form-fitting manner in opposite receptacle openings of the coupling sleeve (10).

7. Bowden cable coupling (1) according to one of Claims 1 to 6, wherein the second coupling unit (4b) is non-releasably connected to the coupling sleeve (10).

8. Bowden cable coupling (1) according to one of Claims 1 to 7, wherein the first sliding unit (6a, 7a) in the first guide bushing (5a) is displaceable in the axial direction (Z) between a proximal terminal position facing the second coupling unit (4b) and a distal terminal position facing away from the second coupling unit (4b), and/or wherein the second sliding unit (6b, 7b) in the second guide bushing (5b) is displaceable in the axial direction (Z) between a proximal terminal position facing the first coupling unit (4a) and a distal terminal position facing away from the first coupling unit (4a).

9. Bowden cable coupling (1) according to Claim 8, wherein the first coupling unit (4a) has a restoring element, wherein displacing the first sliding unit (6a, 7a) in the direction of the distal terminal position is performed counter to the restoring force of the restoring element, and/or wherein the second coupling unit (4b) has a restoring element, wherein displacing the second sliding unit (6b, 7b) in the direction of the proximal terminal position is performed counter to the restoring force of the restoring element.

10. Bowden cable coupling (1) according to Claim 9, wherein only the first coupling unit (4a) has a restoring element.

11. Bowden cable coupling (1) according to one of Claims 1 to 10, wherein the first sliding unit (6a, 7a) has a nipple bearing (18) and a passage opening which is adjacent to the nipple bearing (18) and runs in the axial direction (Z), wherein the core (8) of the first Bowden cable (2a) penetrates the passage opening and a retaining nipple (20) that is connected to the core (8) of the first Bowden cable (2a) is mounted in the nipple bearing (18), and/or wherein the second sliding unit (6b, 7b) has a nipple bearing (18) and a passage opening which is adjacent to the nipple bearing (18) and runs in the axial direction (Z), wherein the core (8) of the second Bowden cable (2b) penetrates the passage opening and a retaining nipple (20) that is connected to the core (8) of the second Bowden cable (2b) is mounted in the nipple bearing (18).

12. Bowden cable coupling (1) according to Claim 5 or 6 and Claim 11, wherein the locking pin (7a; 7b) and the main body (6a, 6b) of the first coupling unit (4a) and/or of the second coupling unit (4b) form sub-regions (18', 18'') of the nipple bearing (18) that are mutually adjacent in the axial direction (Z).

13. Bowden cable coupling (1) according to one of Claims 1 to 12, wherein the first coupling unit (4a) has an adjustment screw (9) which is connected to the first guide bushing (5a), wherein an effective length of a Bowden cable sheath (11) of the first Bowden cable (2a) that encloses the core (8) is adjustable by way of this adjustment screw (9), and/or wherein the second coupling unit (4b) has an adjustment screw (9) which is connected to the second guide bushing (5b), wherein an effective length of a Bowden cable sheath (11) of the second Bowden cable (2b) that encloses the core (8) is adjustable by way of this adjustment screw (9).

14. Bowden cable coupling (1) according to one of Claims 1 to 13, wherein the first Bowden cable (2a) on the end thereof that faces away from the first coupling unit (4a) is operatively connected to an activation element, wherein the activation element forms a counter-bearing for the Bowden cable sheath (11) and, when the activation element is activated, the activation element pulls on the core (8) of the first Bowden cable (2a).

15. Bowden cable coupling (1) according to one of Claims 1 to 14, wherein the sliding units (6a, 7a; 6b, 7b) and/or the guide bushings (5a; 5b) and/or the coupling units (4a; 4b) are of identical configuration.

16. Assembly having an activation element, a functional element which is to be activated by the activation element, and a Bowden cable coupling (1) according to one of Claims 1 to 15, wherein the assembly has a first component and a second component which is able to be disassembled from the first component, wherein the activation element is attached to the first component and the functional element is attached to the second component, wherein the activation element and the functional element to be activated are operatively connected to one another by way of the Bowden cable coupling (1), wherein the coupling sleeve (10) is attached so as to be locationally fixed on the second component.

## Revendications

1. Dispositif d'accouplement (1) de câble Bowden destiné à accoupler de manière amovible un premier câble Bowden (2a) à un deuxième câble Bowden (2b), comportant :
- une première unité d'accouplement (4a), la première unité d'accouplement (4a) comportant une première douille de guidage (5a) et une première unité de coulissement (6a, 7a), la première unité de coulissement (4a) étant relié à une âme (8) du premier câble Bowden (2a), la première douille de guidage (5a) comportant une ouverture de passage pour l'âme (8) du premier câble Bowden (2a), la première unité de coulissement (6a, 7a) étant montée de manière à pouvoir coulisser dans une direction axiale (Z) dans la première douille de guidage (5a),
- une deuxième unité d'accouplement (4b), la deuxième unité d'accouplement (4b) comportant une deuxième douille de guidage (5b) et une deuxième unité de coulissement (6b, 7b), la deuxième unité de coulissement (6b, 7b) étant reliée à une âme (8) du deuxième câble Bowden (2b), la deuxième douille de guidage (5b) comportant une ouverture de passage pour l'âme (8) du deuxième câble Bowden (2b), la deuxième unité de coulissement (6b, 7b) étant montée de manière à pouvoir coulisser dans une direction axiale (Z) dans la deuxième douille de guidage (5b), et
- un manchon d'accouplement(10),
la deuxième unité d'accouplement (4b) étant reliée au manchon d'accouplement (10), la deuxième douille de guidage (5b) étant logée dans le manchon d'accouplement (10) de manière à pouvoir coulisser dans la direction axiale (Z) et la deuxième unité de coulissement (6a, 7b) étant reliée de manière fixe en position au manchon d'accouplement (10), la première unité d'accouplement (4a) étant reliée de manière amovible au manchon d'accouplement (10) par l'intermédiaire d'une fermeture à baïonnette, la première unité de coulissement (6a, 7a) comportant un premier élément constitutif de la fermeture à baïonnette, le manchon d'accouplement (10) comportant un deuxième élément constitutif de la fermeture à baïonnette correspondant au premier élément constitutif, la première unité d'accouplement (4a) pouvant être enfichée dans le manchon d'accouplement (10) dans la direction axiale (Z) et la première unité de coulissement (6a, 7a) pouvant être transférée dans une position de fermeture de la fermeture à baïonnette par rotation dans une direction de rotation autour de la direction axiale (Z), dans la position de fermeture, la première douille de guidage (5a) étant montée dans le manchon d'accouplement (10) de manière à pouvoir coulisser dans la direction axiale et la première unité de coulissement (6a, 7a) étant couplée au manchon d'accouplement (10) si bien que dans la position de fermeture, des déplacements relatifs des unités de coulissement (6a, 7a ; 6b, 7b) par rapport aux douilles de guidage (5a ; 5b) sont couplés les uns aux autres par le manchon d'accouplement (10).

2. Dispositif d'accouplement (1) de câble Bowden selon la revendication 1, la douille de guidage (5a, 5b) respective formant un contre-palier pour une gaine (11) de câble Bowden du câble Bowden (2a, 2b) respectif.

3. Dispositif d'accouplement (1) de câble Bowden selon l'une des revendications 1 à 2, les douilles de guidage (5a, 5b) prenant appui les unes sur les autres dans la direction axiale (Z).

4. Dispositif d'accouplement (1) de câble Bowden selon l'une des revendications 1 à 3, la première unité de coulissement (6a, 7a) comportant des parties faisant saillie dépassant vers l'extérieur radialement par rapport à la première douille de guidage (5a), qui forment le premier élément constitutif de la fermeture à baïonnette, et le manchon d'accouplement (10) comportant des entailles correspondant aux parties faisant saillie, l'entaille respective comportant une entaille longitudinale (14) partant d'une extrémité d'insertion (12), s'étendant dans la direction axiale (Z), qui se confond avec une entaille transversale (15) sur son extrémité fermée arrière.

5. Dispositif d'accouplement (1) de câble Bowden selon la revendication 4, la première unité de coulissement (6a, 7a) comportant un corps de base (6a) guidé axialement dans la première douille de guidage (5a), la première unité de coulissement (6a, 7a) comportant une goupille de sécurité (7a) destinée à bloquer le corps de base (6a) contre une chute hors de la première douille de guidage (5a), la goupille de sécurité (7a) traversant transversalement à la direction axiale (Z) le corps de base (6a) et la première douille de guidage (5a) et des extrémités opposées de la goupille de sécurité (7a) formant les parties faisant saillie de la fermeture de baïonnette dépassant vers l'extérieur radialement.

6. Dispositif d'accouplement (1) de câble Bowden selon les revendications 1 à 5, la deuxième unité de coulissement (6b, 7b) comportant un corps de base (6b) guidé axialement dans la deuxième douille de guidage (5b), la deuxième unité de coulissement (6b, 7b) comportant une goupille de sécurité (7b) destinée à bloquer le corps de base (6b) contre une chute hors de la deuxième douille de guidage (5b), la goupille de sécurité (7b) traversant transversalement à la direction axiale (Z) le corps de base (6b) et la deuxième douille de guidage (5b) et des extrémités opposées de la goupille de sécurité (7b) étant logées par complémentarité de forme dans des ouvertures de logement opposées du manchon d'accouplement (10).

7. Dispositif d'accouplement (1) de câble Bowden selon l'une des revendications 1 à 6, la deuxième unité d'accouplement (4b) étant reliée de manière inamovible au manchon d'accouplement (10).

8. Dispositif d'accouplement (1) de câble Bowden selon l'une des revendications 1 à 7, la première unité de coulissement (6a, 7a) pouvant être coulissée dans la première douille de guidage (5a) dans la direction axiale (Z) entre une position finale proximale tournée vers la deuxième unité d'accouplement (4b) et une position finale opposée à la deuxième unité d'accouplement (4b) et/ou la deuxième unité d'accouplement (6b, 7b) pouvant être coulissée dans la deuxième douille de guidage (5b) dans la direction axiale (Z) entre une position finale proximale tournée vers la première unité d'accouplement (4a) et une position finale distale opposée à la première unité d'accouplement (4a).

9. Dispositif d'accouplement (1) de câble Bowden selon la revendication 8, la première unité d'accouplement (4a) comportant un élément de rappel, un coulissement de la première unité de coulissement (6a, 7a) en direction de la position finale distale étant effectué à l'encontre de la force de rappel de l'élément de rappel et/ou la deuxième unité d'accouplement (4b) comportant un élément de rappel, un coulissement de la deuxième unité de coulissement (6b, 7b) en direction de la position finale proximale étant effectué à l'encontre de la force de rappel de l'élément de rappel.

10. Dispositif d'accouplement (1) de câble Bowden selon la revendication 9, seule la première unité d'accouplement (4a) comportant un élément de rappel.

11. Dispositif d'accouplement (1) de câble Bowden selon l'une des revendications 1 à 10, la première unité de coulissement (6a, 7a) comportant un palier de nipple (18) et une ouverture de passage jouxtant le palier de nipple (18) s'étendant dans la direction axiale (Z), l'âme (8) du premier câble Bowden (2a) traversant l'ouverture de passage et un nipple de maintien (20) relié à l'âme (8) du premier câble Bowden (2a) étant monté dans le palier de nipple (18) et/ou la deuxième unité de coulissement (6b, 7b) comportant un palier de nipple (18) et une ouverture de passage jouxtant le palier de nipple (18) s'étendant dans la direction axiale (Z), l'âme (18) du deuxième câble Bowden (2b) traversant l'ouverture de passage et un nipple de maintien (20) relié à l'âme (8) du deuxième câble Bowden (2b) étant monté dans le palier de nipple (18).

12. Dispositif d'accouplement (1) de câble Bowden selon la revendication 5 ou 6 et selon la revendication 11, la goupille de sécurité (7a ; 7b) et le corps de base (6a, 6b) de la première unité d'accouplement (4a) et/ou de la deuxième unité d'accouplement (4b) formant des zones partielles (18', 18") du palier de nipple (18) se jouxtant mutuellement dans la direction axiale (Z).

13. Dispositif d'accouplement (1) de câble Bowden selon l'une des revendications 1 à 12, la première unité d'accouplement (4a) comportant une vis de réglage (9) reliée à la première douille de guidage (5a), une longueur efficace d'une gaine (11) de câble Bowden renfermant l'âme (8) du premier câble Bowden (2a) pouvant être réglée par ladite vis de réglage (9) et/ou la deuxième unité d'accouplement (4b) comportant une vis de réglage (9) reliée à la deuxième douille de guidage (5b), une longueur efficace d'une gaine (11) de câble Bowden du deuxième câble Bowden (2b) renfermant l'âme (8) pouvant être réglée par ladite vis de réglage (9).

14. Dispositif d'accouplement (1) de câble Bowden selon l'une des revendications 1 à 13, le premier câble Bowden (2a) étant en liaison fonctionnelle sur son extrémité opposée à la première unité d'accouplement (4a) avec un élément d'actionnement, l'élément d'actionnement formant un contre-palier pour la gaine (11) de câble Bowden et tirant l'élément d'actionnement sur l'âme (8) du premier câble Bowden (2a) lors d'un actionnement de l'élément d'actionnement.

15. Dispositif d'accouplement (1) de câble Bowden selon l'une des revendications 1 à 14, les unités de coulissement (6a, 7a ; 6b, 7b) et/ou les douilles de guidage (5a ; 5b) et/ou les unités d'accouplement (4a ; 4b) étant réalisées de manière identique.

16. Ensemble avec un élément d'actionnement, un élément fonctionnel à actionner par l'élément d'actionnement et un dispositif d'accouplement (1) de câble Bowden selon l'une des revendications 1 à 15, l'ensemble comportant un premier composant et un deuxième composant pouvant être démonté du premier composant, l'élément d'actionnement étant mis en place sur le premier composant et l'élément fonctionnel étant mis en place sur le deuxième composant, l'élément d'actionnement et l'élément fonctionnel à actionner étant en liaison fonctionnelle l'un avec l'autre par le dispositif d'accouplement (1) de câble Bowden, le manchon d'accouplement (10) étant mis en place de manière stationnaire sur le deuxième composant.
